# EUROPÄISCHE PATENTANMELDUNG

(11) **EP 3 989 143 A1**
(43) Veröffentlichungstag der Anmeldung: **27.04.2022**
(21) Anmeldenummer: 20203901.2
(22) Anmeldetag: 26.10.2020
(51) Int. Cl.: G06Q 10/08, G07F 11/00

(54) **SYSTEM UND ABHOLSTATION ZUR BEREITSTELLUNG VON GÜTERN**

(71) Anmelder: Viabirds Technologies GmbH, 5582 St. Michael im Lungau (AT)
(72) Erfinder: MACHEINER, Martin, 5582 St. Michael im Lungau (AT); PLANITZER, Alexander, 5582 St. Michael im Lungau (AT)
(74) Vertreter: MERH-IP Matias Erny Reichl Hoffmann Patentanwälte PartG mbB

(57) **Zusammenfassung**

Es wird eine Abholstation (110) zur Bereitstellung von Gütern für eine Bestellung (141) beschrieben. Die Abholstation (110) umfasst ein Eingabemodul (201), das ausgebildet ist, für eine Bestellung (141) eines Nutzers, eine Mehrzahl von Gütern, die an einer entsprechenden Mehrzahl von unterschiedlichen Zeitpunkten von einer entsprechenden Mehrzahl von unterschiedlichen Anbietern an der Abholstation (110) angeliefert wird, in der Abholstation (110) aufzunehmen. Des Weiteren umfasst die Abholstation (110) einen Lagerungskoordinator (204), der eingerichtet ist, die Mehrzahl von Gütern, die an der entsprechenden Mehrzahl von Zeitpunkten über das Eingabemodul (201) entgegengenommen werden, in einer Bestell-Box (206) für die Bestellung (141) aufzunehmen und in der Bestell-Box (206) zu lagern. Die Abholstation (110) umfasst ferner ein Ausgabemodul (110), das ausgebildet ist, die in der Bestell-Box (206) aufgenommene Mehrzahl von Gütern für die Bestellung (141) an den Nutzer zu übergeben.

## Beschreibung

Die Erfindung betrifft ein System und eine Abholstation zur Bereitstellung von Gütern, insbesondere in Zusammenhang mit einem Einkaufsprozess.

Konsumenten kaufen heute vermehrt Waren im Internet, die dann durch Transportdienstleister zu einer Abholstation oder zu dem Wohnort des Konsumenten geliefert werden. Unterschiedliche Waren werden dabei häufig bei unterschiedlichen Anbietern bestellt und separat an den Konsumenten geliefert. Dies ist mit relativ hohen Transportkosten und mit einem relativ niedrigen Komfort für den Konsumenten verbunden.

Die vorliegende Erfindung befasst sich mit der technischen Aufgabe, die Effizienz und den Komfort für die Lieferung von Waren, allgemein von Gütern, zu erhöhen. Die technische Aufgabe wird durch den unabhängigen Anspruch gelöst. Die abhängigen Ansprüche beschreiben vorteilhafte Ausführungsformen.

Gemäß einem Aspekt wird eine Abholstation zur Bereitstellung von Gütern für eine Bestellung beschrieben. Die einzelnen Güter können jeweils ein Volumen von 1qm oder weniger, insbesondere von 0,5qm oder weniger aufweisen. Ferner können die einzelnen Güter jeweils ein Gewicht von 10kg oder weniger aufweisen. Die Güter können derart ausgebildet sein, dass die Güter durch einen Postdienst geliefert werden können. Insbesondere können Güter ausgeschlossen sein, die nur durch eine Spedition geliefert werden können. Beispielhafte Güter sind Produkte bzw. Waren, etwa Lebensmittel, IT Produkte, etc.

Die Abholstation umfasst ein Eingabemodul, das ausgebildet ist, für eine Bestellung eines Nutzers, eine Mehrzahl von Gütern, die an einer entsprechenden Mehrzahl von unterschiedlichen Zeitpunkten von einer entsprechenden Mehrzahl von unterschiedlichen Anbietern an der Abholstation angeliefert wird, in der Abholstation aufzunehmen. Das Eingabemodul kann z.B. einen Kasten umfassen, in den jeweils ein Gut zur Aufnahme in der Abholstation (insbesondere zur Aufnahme in das Gehäuse der Abholstation) von einem Anbieter abgelegt werden kann.

Die Abholstation kann es somit unterschiedlichen Anbietern ermöglichen, unabhängig voneinander Güter für ein oder mehrere Bestellungen über das Eingabemodul an die Abholstation zu übergeben. So kann eine flexible Anlieferung der Güter für ein oder mehrere Bestellungen ermöglicht werden. Die einzelnen Güter können dabei spezifisch für jeweils eine Bestellung angeliefert werden. Mit anderen Worten, es kann auf eine Lagerung von Gütern, die unabhängig von einer Bestellung erfolgt, verzichtet werden. So kann die erforderliche Lagerfläche reduziert werden.

Die Abholstation umfasst ferner einen Lagerungskoordinator, der eingerichtet ist, die Mehrzahl von Gütern, die an der entsprechenden Mehrzahl von Zeitpunkten über das Eingabemodul entgegengenommen werden, in einer (gemeinsamen) Bestell-Box für die Bestellung aufzunehmen und in der Bestell-Box zu lagern. Die an unterschiedlichen Zeitpunkten (unabhängig voneinander) angelieferten Güter einer Bestellung können somit in einer gemeinsamen Bestell-Box (z.B. in einem Karton) gesammelt werden. Zu diesem Zweck kann die Bestell-Box wiederholt an das Eingabemodul transportiert werden, um an dem jeweiligen Zeitpunkt das jeweils angelieferte Gut in die Bestell-Box zu legen.

Der Lagerungskoordinator kann z.B. ein Transportband zum Transport und/oder zur Lagerung einer Bestell-Box umfassen. Alternativ oder ergänzend kann der Lagerungskoordinator einen Roboterarm umfassen, der eingerichtet ist, ein Gut in eine Bestell-Box und/oder aus einer Bestell-Box zu befördern.

Des Weiteren umfasst die Abholstation ein Ausgabemodul, das ausgebildet ist, die in der Bestell-Box aufgenommene Mehrzahl von Gütern für die Bestellung an den Nutzer zu übergeben. Das Ausgabemodul kann insbesondere ausgebildet sein, die Mehrzahl von Gütern für eine Bestellung in der Bestell-Box an einen Nutzer auszugeben.

Es wird somit eine Abholstation beschrieben, die es einem Nutzer ermöglicht, im Rahmen einer Bestellung bei unterschiedlichen Anbietern Güter zu bestellen, die dann von der Abholstation in ein oder mehreren Bestell-Boxen zusammengefasst werden, so dass die Bestellung in komfortabler Weise von dem Nutzer abgeholt werden kann.

Die Abholstation kann ausgebildet sein, an einen Straßenrand gestellt zu werden. Beispielsweise kann die Abholstation ein quaderförmiges Gehäuse, z.B. mit einer Länge von 5m oder weniger, mit einer Breite von 5m oder weniger und/oder mit einer Höhe von 5m oder weniger aufweisen.

Des Weiteren kann die Abholstation ausgebildet sein, die Mehrzahl von Gütern für eine Bestellung automatisch von dem Eingabemodul in eine Bestell-Box und innerhalb der Bestell-Box zu dem Ausgabemodul zu transportieren. So kann eine besonders effiziente Zusammenstellung von Bestellungen ermöglicht werden.

Das Ausgabemodul kann eingerichtet sein, zu überprüfen, ob ein Nutzer autorisiert ist, die Mehrzahl von Gütern für eine Bestellung abzuholen. Die Authentisierung kann z.B. über ein mobiles Anwendergerät und/oder über eine Chipkarte und/oder über ein Passwort erfolgen. Die Mehrzahl von Gütern für eine Bestellung wird typischerweise nicht an den Nutzer übergeben, wenn bestimmt wird, dass der Nutzer nicht zur Abholung autorisiert ist. Andererseits kann die Mehrzahl von Gütern für eine Bestellung, ggf. nur dann, an den Nutzer übergeben werden, wenn bestimmt wird, dass der Nutzer zur Abholung autorisiert ist. So kann eine besonders sichere Abwicklung einer Bestellung ermöglicht werden.

Der Lagerungskoordinator kann eingerichtet sein, vor der Ankunft des Nutzers an der Abholstation, insbesondere auf Basis von Positionsdaten (z.B. GPS-Koordinaten) in Bezug auf die Position des Nutzers, zu prädizieren, dass der Nutzer die Mehrzahl von Gütern für die Bestellung an einem vorausliegenden Zeitpunkt abholen wird. Der Lagerungskoordinator kann dann vorausschauend bewirken, dass die Bestell-Box an dem vorausliegenden Zeitpunkt an dem Ausgabemodul zur Abholung bereitsteht (z.B. in einem Lagerraum in unmittelbarer Nähe zu dem Ausgabemodul). So kann eine besonders komfortable Abwicklung einer Bestellung ermöglicht werden.

Die Abholstation kann ein Lagerungsmodul zur Lagerung von ein oder mehreren Bestell-Boxen umfassen. Das Lagerungsmodul kann dabei in dem Gehäuse der Abholstation angeordnet sein. Der Lagerungskoordinator kann eingerichtet sein, eine Bestell-Box (für eine Bestellung) zwischen dem Eingabemodul und dem Lagerungsmodul und/oder zwischen dem Lagerungsmodul und dem Ausgabemodul zu transportieren. Durch die Bereitstellung eines Lagerungsmodus zur Lagerung von Bestell-Boxen kann eine besonders flexible Zusammenstellung der Güter für ein oder mehrere unterschiedliche Bestellungen ermöglicht werden.

Die Abholstation kann derart modular aufgebaut sein, dass das Lagerungsmodul durch ein oder mehrere Erweiterungsmodule zur Lagerung von ein oder mehreren weiteren Bestell-Boxen erweiterbar ist. Der modulare Aufbau der Abholstation ermöglicht es, die Abholstation in flexibler Weise an unterschiedliche Nutzungsanforderungen (z.B. für eine ländliche Region oder für eine Stadt) anzupassen.

Die Abholstation ist typischerweise für die Abwicklung einer Mehrzahl von Bestellungen (z.B. von 10 oder mehr Bestellungen) ausgebildet. Der Lagerungskoordinator kann eingerichtet sein, eine Mehrzahl von Bestell-Boxen (z.B. 10 oder mehr) für eine entsprechende Mehrzahl von Bestellungen (z.B. 10 oder mehr) bereitzustellen. Die Abholstation kann somit ausgebildet sein, mehrere unterschiedliche Bestellungen zu verwalten und zusammenzustellen.

Der Lagerungskoordinator kann ausgebildet sein, bei der Aufnahme eines Guts über das Eingabemodul, insbesondere durch Einlesen eines maschinenlesbaren Codes des aufgenommenen Guts und/oder auf Basis einer Eingabe des übergebenden Anbieters (z.B. auf Basis einer Eingabe an einem mobilen Anwendergerät des Anbieters), zu ermitteln, für welche der Mehrzahl von Bestellungen das aufgenommene Gut bestimmt ist. Es kann somit an dem Eingabemodul eine Zuordnung zwischen einem angelieferten Gut und einer Bestellung erfolgen. Es kann dann durch den Lagerungskoordinator bewirkt werden, dass das aufgenommene Gut in der Bestell-Box für die ermittelte Bestellung aufgenommen wird. So kann eine besonders effiziente und zuverlässige Zusammenstellung von unterschiedlichen Bestellungen ermöglicht werden.

Der Lagerungskoordinator kann eingerichtet sein, bei der Aufnahme eines Guts über das Eingabemodul zu ermitteln, ob für die mit dem Gut assoziierte Bestellung bereits eine Bestell-Box mit ein oder mehreren anderen Gütern für die Bestellung in der Abholstation gelagert wird. Es kann dann bewirkt werden, dass eine leere Bestell-Box aus einem Box-Lager der Abholstation an dem Eingabemodul bereitgestellt wird, wenn ermittelt wird, dass noch keine Bestell-Box für die Bestellung in der Abholstation gelagert wird. Andererseits kann bewirkt werden, dass die bereits in der Abholstation gelagerte Bestell-Box an dem Eingabemodul bereitgestellt wird, wenn ermittelt wird, dass bereits eine Bestell-Box für die Bestellung in der Abholstation gelagert wird. So kann eine besonders effiziente und zuverlässige Zusammenstellung von unterschiedlichen Bestellungen ermöglicht werden.

Der Lagerungskoordinator kann eingerichtet sein, zu bestimmen, dass von einem Nutzer eine neue Bestellung abgesetzt wurde, die an der Abholstation bereitgestellt werden soll. Die Information in Bezug auf eine neue Bestellung kann z.B. durch eine externe Koordinierungseinheit bereitgestellt werden. In Reaktion auf eine neue Bestellung kann eine Bestell-Box aus dem Box-Lager der Abholstation für die neue Bestellung reserviert werden. So kann eine besonders zuverlässige Kommissionierung von Bestellungen ermöglicht werden.

Der Lagerungskoordinator kann ausgebildet sein, Abmessungsinformation in Bezug auf die Abmessung (z.B. Höhe, Breite und/oder Tiefe) der einzelnen Güter der Mehrzahl von Gütern einer Bestellung zu ermitteln. Des Weiteren kann der Lagerungskoordinator eingerichtet sein, die einzelnen Güter in Abhängigkeit von der Abmessungsinformation in einer Bestell-Box zu platzieren. So kann eine besonders platzsparende und/oder schonende Anordnung der Güter in der Bestell-Box ermöglicht werden.

Gemäß einem Aspekt wird ein System zur Bereitstellung von Bestellungen beschrieben. Das System umfasst eine Benutzerschnittstelle, insbesondere als Teil eines mobilen Anwendergeräts (etwa eines Smartphones) eines Nutzers, die eingerichtet ist, es einem Nutzer zu ermöglichen, eine gemeinsame Bestellung bei einer Mehrzahl von unterschiedlichen Anbietern für eine entsprechende Mehrzahl von Gütern zur gesammelten Abholung an einer Abholstation abzusetzen.

Des Weiteren umfasst das System eine in diesem Dokument beschriebene Abholstation.

Das System umfasst ferner eine Koordinierungseinheit, die eingerichtet ist, zu veranlassen, dass die Mehrzahl von Gütern von der entsprechenden Mehrzahl von Anbietern an die Abholstation geliefert wird. Zu diesem Zweck kann die Koordinierungseinheit über jeweils eine Kommunikationsverbindung eine Nachricht an den jeweiligen Anbieter senden.

Des Weiteren ist die Koordinierungseinheit eingerichtet, die Abholstation (z.B. durch Senden einer Nachricht über eine Kommunikationsverbindung) zu veranlassen, die Mehrzahl von Gütern für die Bestellung in einer Bestell-Box zu sammeln und auf Anfrage an den Nutzer auszugeben.

Die Koordinierungseinheit kann eingerichtet sein, die Anzahl von verfügbaren Bestell-Boxen für neue Bestellungen in der Abholstation zu ermitteln. Des Weiteren kann die Koordinierungseinheit eingerichtet sein, eine Bestellung zur Lieferung an die Abholstation zu unterbinden, wenn in der Abholstation keine Bestell-Box für eine neue Bestellung verfügbar ist. So kann ein zuverlässiger Bestellprozess ermöglicht werden.

Es ist zu beachten, dass die in diesem Dokument beschriebenen Verfahren, Vorrichtungen und Systeme sowohl alleine, als auch in Kombination mit anderen in diesem Dokument beschriebenen Verfahren, Vorrichtungen und Systemen verwendet werden können. Desweiteren können jegliche Aspekte der in diesem Dokument beschriebenen Verfahren, Vorrichtung und Systemen in vielfältiger Weise miteinander kombiniert werden. Insbesondere können die Merkmale der Ansprüche in vielfältiger Weise miteinander kombiniert werden.

Im Weiteren wird die Erfindung anhand von Ausführungsbeispielen näher beschrieben. Dabei zeigen
Figur 1 ein beispielhaftes System zur Bereitstellung von Gütern;
Figur 2 eine beispielhafte Abholstation aus der Vogelperspektive; und
Figur 3 ein Ablaufdiagramm eines beispielhaften Verfahrens zur Bereitstellung von Gütern.

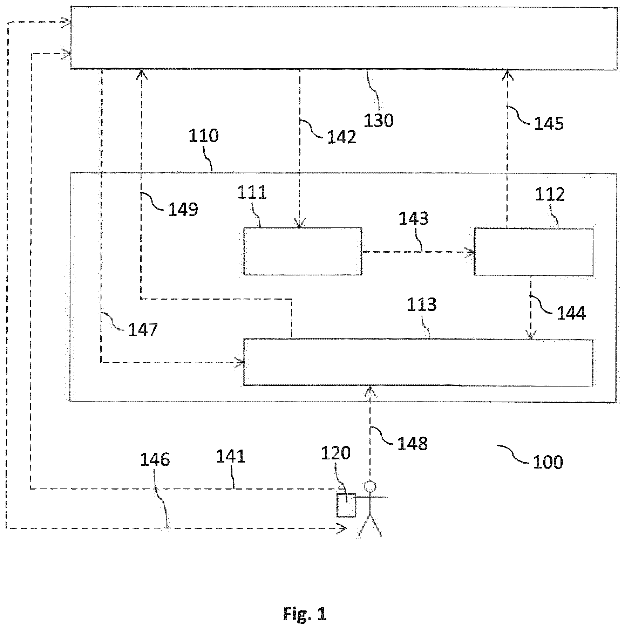

Wie bereits eingangs dargelegt, befasst sich das vorliegende Dokument mit der effizienten und komfortablen Bereitstellung von Gütern. In diesem Zusammenhang zeigt Fig. 1 ein beispielhaftes System 100 zur Bereitstellung von Gütern. Das System 100 umfasst eine Abholstation 110, die es einem Besteller von Gütern ermöglicht, bestellte Güter an der Abholstation 110 abzuholen, und die es einem Anbieter von Gütern ermöglicht, bestellte Güter in der Abholstation 110 bereitzustellen. Des Weiteren umfasst das System 100 eine Besteller-Vorrichtung 120, z.B. ein Anwendergerät, etwa ein Smartphone oder ein PC, die es einem Besteller ermöglicht, eine Bestellung für Güter abzusetzen. Außerdem umfasst das System 100 eine Koordinierungseinheit 130, z.B. als Teil einer Cloud, die eingerichtet ist, die Bereitstellung von bestellten Gütern zu koordinieren.

Das System 100 kann ausgebildet sein, es einem Besteller über die Besteller-Vorrichtung 120 zu ermöglichen, eine Bestellung 141 für eine Menge von Gütern einzustellen. Dabei können die Güter zumindest teilweise von unterschiedlichen Anbietern geliefert werden.

Eine Bestellung 141 kann auf die unterschiedlichen Anbieter aufgeteilt werden, die von der Bestellung 141 betroffen sind. Die einzelnen Anbieter können daraufhin die jeweiligen Güter an die Abholstation 110 liefern. Innerhalb der Abholstation 110 können die von den unterschiedlichen Anbietern (an unterschiedlichen Zeitpunkten) erhaltenen Güter für die Abholung durch den Besteller in einem Abhol-Behältnis (z.B. in einer Bestell-Box) gesammelt werden. Das Abhol-Behältnis mit den Gütern von den unterschiedlichen Anbietern kann dann von der Abholstation 110 an den Besteller übergeben werden.

Im Folgenden werden einige Begriffe beispielhaft erklärt, die in diesem Dokument verwendet werden,
- Pickup Station bzw. Abholstation 110: Das ganzheitliche physische System.
- Bestellung: Besteht aus mehreren Produkten von verschiedenen Anbietern. Aufgegeben vom Kunden. Dieser Begriff wird auch oft synonym für das eigentlich gelagerte Paket verwendet, obwohl die Bestellung der logische Begriff ist und das Paket der physische Gegenpart.
- Produkt: Einzelnes Gut, welches von einem Anbieter angeboten wird. Ein oder mehrere Produkte bilden eine Bestellung.
- Paket: Kartonbox, in der die einzelnen Produkte einer Bestellung aufbewahrt werden. Der Kunde erhält bei der Bestellungsübergabe das Paket überreicht. Paket und Bestellung werden oft synonym verwendet.
- Verpackung: Siehe Paket.
- Anbieter: Lokale Unternehmen, die ihre Produkte zur Abholung anbieten und diese auch zur Pickup Station bringen.
- Nutzer, Kunde: Endkunde, der die Bestellung aufgibt und auch mit der Pickup Station interagiert.
- Modul: Ein Modul erfüllt eine Kernaufgabe des Systems. Eingabe, Ausgabe, Lagerung, Lagerungskoordinierung.
- Komponente: Teil eines Moduls.
- Produktübergabe: Übergabe eines Produkts vom Anbieter zur Pickup Station.
- Bestellungsübergabe: Übergabe der Bestellung von der Pickup Station zum Kunden.

Die Pickup Station 110 kann als Übergabeort eines online getätigten Einkaufs dienen, wobei der Nutzer von mehreren lokalen Anbietern bestellen kann. Lokale Anbieter können über eine Wareneingabevorrichtung bzw. über ein Eingabemodul der Pickup Station 110 ihre Produkte der Pickup Station 110 übergeben. Die in diesem Dokument beschriebene (vollautomatisierte) Pickup Station 110 kann ausgebildet sein, als ein in sich geschlossenes Kommissionierungs-, Pickup- und Fulfillmentsystem, insbesondere ausgestattet mit den Merkmalen der Erweiterbarkeit, des modularen Aufbaus, der schnellen Warenausgabe und/oder Selbstkonfiguration und/oder der Selbstinstallation der vorhandenen Software.

Die diversen Produkte der unterschiedlichen Anbieter werden für jede Order bzw. Bestellung 141 kommissioniert, wodurch der Kunde bei Abholung nur ein Paket (o.Ä.) entgegennehmen muss. Der Kunde kann entweder per Auto oder zu Fuß das Paket entgegennehmen, wobei die Warenausgabe unter Berücksichtigung der Position des Kunden (die über eine angebundene Cloud bzw. Koordinierungseinheit 130 periodisch zur Verfügung gestellt wird) die nahende Paketübergabe bereits vorbereiten kann. Bei erfolgreicher Abholung markiert die Pickup Station 110 die Order als ausgeführt, was somit auch über die Koordinierungseinheit 130 direkt in einer Datenbank hinterlegt wird. Ziel ist eine möglichst schnelle und reibungslose Übergabe der bestellten Produkte, die mithilfe der verbauten Technologien bewerkstelligt werden soll.

Das beschriebene System 100, insbesondere die Pickup-Station 110, weist Modularität und Erweiterbarkeit auf. Dies ermöglicht den Einsatz einer Pickup Station 110 in einer Vielzahl von Szenarien. Da solche Stationen 110 an verschiedenen geographischen Punkten aufgestellt werden, kann sich der Funktionsumfang der Stationen 110 jeweils den Gegebenheiten anpassen. Eine modulare und erweiterbare Hardware-Architektur gewährleistet dies. Eine Hardware Plattfonn dient als Grundgerüst, wobei die einzelnen Module für Eingabe, Lagerung und Ausgabe über diese Plattform kommunizieren und nach Belieben ausgetauscht werden können. Die Hardware Plattform bietet auch die Möglichkeit, dass neue Module in das System integriert werden können. Ein Beispiel für ein separates Hardware-Modul ist das Paket-Rückgabemodul, mit welchem Kunden bereits georderte Pakete über Drittanbieter zurückgeben können.

Die Pickup Station 110 ist über das Internet mit einer Koordinierungseinheit 130 (z.B. in einer Cloud) verbunden, welche die Daten über die Bestellungen 141 und die Positionen der Nutzer liefert. Die internen Softwaresysteme kommunizieren untereinander, um eine schnelle Warenausgabe zu gewährleisten. Nach einer erfolgreichen Warenübergabe wird die Bestellung auch in der Koordinierungseinheit 130 als ausgeführt markiert.

Im Rahmen des Systems 100 können ein oder mehrere der folgenden Maßnahmen ausgeführt werden:
1. Periodische Standortaktualisierungen: Der Nutzer sendet über ein internet-und lokalisierungsfähiges (GPS) Endgerät 120 den aktuellen Standort in definierten Zeitintervallen zu der Koordinierungseinheit 130. Es werden nur Standortdaten von Nutzern geschickt, die eine Bestellung 141 bereits platziert haben, diese jedoch noch nicht abgeholt haben.
2. Verarbeitung von periodischen Bestell- und Standortaktualisierungen 142: Die Kommunikationseinheit 130 sendet in definierten Zeitintervallen die Bestellungsinformationen gepaart mit den Standorten der zugehörigen Nutzer zur Pickup Station 110, insbesondere zu einer Bestelleinheit 111 der Pickup Station 110. Dadurch kann sich die Pickup Station 110 die erwarteten Abholzeiten der einzelnen Nutzer errechnen (Estimated Time of Arrival) und in einer internen logischen Warteschlange organisieren.
3. Übergabe freigeben 143: Sobald der Abholzeitpunkt des Nutzers einen Schwellwert (ausgehend von dem aktuellen Zeitpunkt) unterschreitet, oder der Nutzer eine definierte Entfernung zur Pickup Station 110 erreicht, werden die zugehörigen bestellten Güter im Lagerungssystem 112 der Pickup Station 110 zu einem Zwischenspeicher überstellt.
4. Bestellte Güter zum Zwischenspeicher überstellen (Schritt 144): Der Zwischenspeicher selbst hängt von der konkreten Implementierung des Systems 110 ab. Er kann dementsprechend entfallen, wobei in diesem Fall das Ausgabemodul 113 die Aufgabe des Zwischenspeichers übernimmt. Durch die Überstellung in den Zwischenspeicher können die anderen Lagerungsressourcen wieder genutzt werden, da sich die bestellten Güter kurz vor der Abholung befinden.
5. Übergabe vom Benutzer autorisieren: Bevor die bestellten Güter für die Abholung freigeben werden, wird über die angebundene Koordinierungseinheit 130 eine Anfrage 146 an den Nutzer gestellt, damit dieser die in Kürze folgende Übergabe bestätigt.
6. Nutzer autorisiert Übergabe: Der Nutzer autorisiert auf seinem internetfähigen Endgerät 120 die Übergabe. Dadurch wird sichergestellt, dass die Bestellung auf Anordnung des Nutzers freigegeben wird.
7. Übergabeprozess starten (Schritt 147): Die bestellten Güter in der Pickup Station 110 werden zur Abholung freigegeben. Das heißt, dass das Ausgabemodul 113, in welchem sich die bestellten Güter zu diesem Zeitpunkt befinden, freigegen wird. Die konkrete Freigabe hängt von der konkreten Implementierung des Ausgabemoduls 113 ab. Der Freigabemechanismus kann z.B. mit einem Verschluss (z.B. einer mechanischen Trennwand) realisiert werden.
8. Die bestellten Güter entgegennehmen (Schritte 148, 149): Der Nutzer entnimmt die bestellten Güter von der Pickup Station 110. Ferner kann die Entnahme der Güter der Koordinierungseinheit 130 bestätigt werden. Damit endet die Interaktion zwischen dem Nutzer und der Pickup Station 110.

Durch die in diesem Dokument beschriebene kompakte automatisierte Übergabe-und Kommissionierungseinheit (d.h. Abholstation) 110 kann eine kostengünstige und komfortable Produktübergabe ermöglicht werden. Durch einen hohen Grad der Automatisierung wird kein menschlicher Betreiber für den Betrieb des Systems 100 benötigt. Außerdem kann durch einen modularen Aufbau nach Belieben eine Erweiterung der Pickup Station 110 ermöglicht werden.

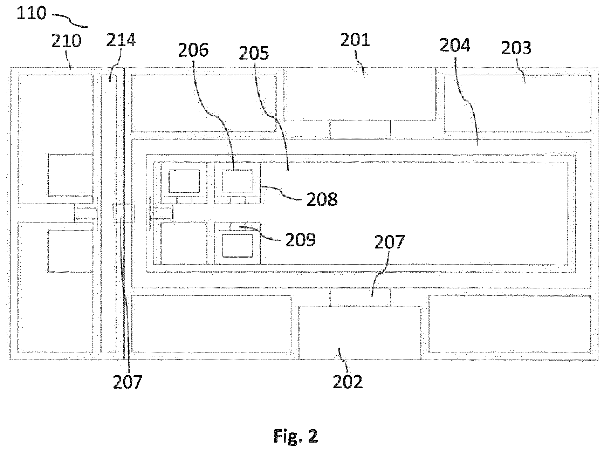

Die Pickup Station 110 kann, wie in Fig. 2 dargelegt, unterschiedliche Module, insbesondere ein Eingabemodul 201, ein Ausgabemodul 113, 202, ein Lagerungsmodul 203 und/oder einen Lagerungskoordinator 204 umfassen. In Fig. 2 ist eine Pickup Station 110 mit insgesamt 7 Lagerungsmodulen 203, 205 dargestellt, wobei die 2 Lagerungsmodule 203 auf der linken Seite in einem sogenannten Lagerungserweiterungsmodul 210 angeordnet sind. Da der Lagerungsplatz von Bestellungen 141 typischerweise ein limitierender Faktor ist, kann mithilfe von Erweiterungsmodulen 210 der Lagerungsplatz vergrößert werden, womit auch mehr Güter von Bestellungen 141 gelagert werden können. Die Güter für eine Bestellung 141 werden über das Ausgabemodul 202 dem Kunden übergeben. Das Ausgabemodul 202 und das Lagerungsmodul 203 sind dabei über den sogenannten Lagerungskoordinator 204 miteinander verbunden. In einem konkreten Falle kann dies ein im Rechteck angeordnetes Fließband sein. Da durch die Cloud-Anbindung die Position des Kunden bekannt ist, können die unmittelbar neben dem Ausgabemodul 202 angeordneten Lagerungsmodule 203 als temporäre Zwischenspeicher genutzt werden, um eine schnelle Übergabe zu gewährleisten. Je nach konkreter Implementierung des Lagerungskoordinators 204, kann auch der Lagerungskoordinator 204 selbst als Zwischenspeicher für die schnelle Übergabe genutzt werden (z.B. im Falle einer Fließ- bzw. Transportband-Implementierung). Das Eingabemodul 201, mit welchem unterschiedliche Produktanbieter die Produkte an die Pickup Station 110 übergeben, ist ebenfalls über den Lagerungskoordinator 204 mit den anderen Modulen 203, 202 verbunden. Der Lagerungskoordinator 204 kann auf Basis eines Fließbandes implementiert sein. Eine weitere Implementierungsmöglichkeit ist auf Basis eines Roboterarms, oder etwa auf Basis eines pneumatischen Rohrsystems. Die Implementierung des Lagerungskoordinators 204 bestimmt typischerweise den Aufbau und das Layout der Pickup Station 110.

Die Lagerung von Gütern für eine Bestellung 141 erfolgt in einem Karton und/oder in einer (Bestell-) Box und wird im Folgenden kurz als Verpackung bezeichnet. Einzelne Produkte von Anbietern können dabei in einer genormten Verpackung zugeliefert werden. Im Eingabemodul 201 kann sich ein Lager für das Verpackungsmaterial befinden. Die Güter für eine Bestellung 141 können in einer genormten Lagerungsbox 206 (z.B. in einem Hauptlager 205) abgelegt werden. Das Hauptlager 205 kann über eine Vorrichtung zum Hinausschieben und Hereinziehen von Verpackungsboxen 206 verfügen. Sobald ein neues Produkt für eine noch nicht angelegte Bestellung 141 angeliefert wird, wird eine neue Lagerungsbox 206 für diese Bestellung 141 reserviert. Das Produkt wird in die Verpackungsbox 206 gelegt und die partielle Bestellung 141 (falls weitere Produkte hinzugefügt werden) wird in dem Lagerungsmodul 203 zwischengelagert. Sobald der Kunde sich nähert und anzeigt, dass er die Güter aus der Bestellung 141 abholen will, werden die bestellten Güter zum Ausgabemodul 202 geliefert und dem Kunden dort übergeben.

Das Lagerungserweiterungsmodul 210 kann einen selbstständigen Lagerungskoordinator 214 umfassen, welcher mit dem Hauptlagerungskoordinator 204 über ein Verbindungselement 207 verbunden werden kann.

Wie bereits oben dargelegt, kann die Pickup-Station 110 vier Grundmodule 201, 202, 203, 204 umfassen, das Eingabe-, Lagerungs-, Ausgabe- und Lagerungskoordinationsmodul (bzw. den Lagerungskoordinator). Jedes dieser Module kann in einer unterschiedlichen Version eingebaut sein, neue Technologien einsetzen oder neue Möglichkeiten für die Lagerung (zum Beispiel Kühlung) bereitstellen.

Das Koordinationsmodul 204 ist typischerweise nicht austauschbar. Die anderen Module 201, 202, 203 können ggf. während des Betriebes ausgetauscht und aufgewertet werden, insbesondere da sie über eine Hardwareplattform und eine definierte Modulschnittstelle kommunizieren.

Modularität kann insbesondere bei der Lagerung verwendet werden, um den Lagerungsplatz der Pickup Station 110 zu erweitern und um Produkte mit. unterschiedlichen Lagerungsanforderungen (z.B. Lagerungstemperaturen) lagern zu können.

Die Modularität kann mittels einer Common Hardware Plattform realisiert werden. Die Common Hardware Plattform kann den einzelnen Modulen eine Stromversorgung und/oder eine Datenanbindung bereitstellen. Durch die Verwendung einer gemeinsamen Plattform können die einzelnen Module mit Strom versorgt werden und können über ein Bussystem miteinander kommunizieren. Die einzelnen Module haben spezifische Aufgaben, welche durch eine Schnittstellenbeschreibung definiert sind.

Das Eingabemodul 201 kann folgende Funktionen aufweisen:
- Produkte von Anbietern annehmen;
- Produkte mit Bestellungen 141 assoziieren;
- Lagerungs-Koordinaten von einer Bestellung 141 für ein spezifisches Produkt auflösen;
- Produkt zum Lagerungskoordinator 204 manövrieren; und/oder
- Neue Verpackungen für neue Bestellungen 141 organisieren.

Das Lagerungsmodul 203 kann folgende Funktionen aufweisen:
- Pakete vom Lagerungskoordinator 204 annehmen;
- Pakete dem Lagerungskoordinator 204 übergeben; und/oder
- Metadaten über Lagerungsbox 206 bereitstellen (z.B.: Temperatur)

Das Ausgabemodul 202 kann folgende Funktionen aufweisen:
- Pakete vom Lagerungskoordinator 204 annehmen;
- Übergabemechanismus entsperren, um einen Nutzer das Paket entgegennehmen zu lassen; und/oder
- Pakete zurück zur Lagerungsbox führen, im Falle eines Fehlers während der Übergabe.

Der Lagerungskoordinator 204 kann folgende Funktionen aufweisen:
- Pakete vom Eingabemodul 201 zum Lagerungsmodul 203 manövrieren;
- Pakete vom Lagerungsmodul 203 zum Ausgabemodul 202 manövrieren; und/oder
- Verbindung zu einem Erweiterungsmodul 210 aufbauen.

Über eine Schnittstelle können die Module untereinander - auch mit einer unterschiedlichen Versionsnummer - kommunizieren.

Durch die Verwendung von ein oder mehreren Lagerungserweiterungsmodulen 210 kann der in einer Pickup Station 110 verfügbare Lagerraum erweitert werden. Das Hauptlagerungsmodul 205 kann ein oder mehrere Erweiterungs-Ports aufweisen, an denen jeweils zumindest ein Lagerungserweiterungsmodul 210 installiert werden kann. Ein Erweiterungsmodul 210 kann dabei über die Common Hardware Plattform in die bestehende Station 110 eingebunden werden. Ein Lagerungserweiterungsmodul 210 kann zumindest einen Erweiterungs-Port für eine weitere Lagerungserweiterungen aufweisen.

Ein Erweiterungs-Port ist typischerweise eine physische Verbindung zwischen der Hauptkomponente 205 und der Lagerungserweiterungskomponente 210. Die Realisierung des Verbindungsstücks hängt von der konkreten Implementierung des verwendeten Lagerungskoordinators 204 ab. Im Falle einer Fließbandimplementierung des Lagerungskoordinators 204 kann die Verbindung 207 auch mittels eines Fließbandes realisiert werden, wobei sich an beiden Seiten des Verbindungsstückes 207 ein Schieber befinden kann, der die Pakete auf das Verbindungsstück 207 bzw. von dem Verbindungsstück 207 schiebt. Dadurch ist es möglich, den begrenzten Lagerungsplatz zu erweitern.

Bei der Installation eines Lagerungserweiterungsmoduls 210 kann zwischen einer physischen und logischen Installation unterschieden werden. Die physische Installation verbindet die Komponenten 210, 204, 205 miteinander, während die logische Installation automatisch nach der physischen Installation erfolgen kann. Die logische Installation bindet die neu hinzugekommenen Lagerungsmöglichkeiten in die bestehende Station 110 ein.

Die grundlegende Station 110 kann als Container betrachtet werden. Erweiterungsmodule 210 können an diesem Container über Vorrichtungen und Schienen angebracht und installiert werden. Die Erweiterungen können so mit allen Modulen zusammengehängt werden, sprich, auch die Erweiterungsmodule 210 können die genannten Erweiterungsvorrichtungen aufweisen. Dadurch kann bewirkt werden, dass die Pickup Station 110 ein kohärenter Container ist, obwohl sie aus verschiedenen Modulen besteht. Die Warenlagerungserweiterungen nehmen hier eine Sonderstellung ein, verlangen sie doch nach einer physikalischen Verbindung zu den Basismodulen, um einen gemeinsam nutzbaren Lagerraum zu schaffen, welcher vom Lagerungskoordinator 204 verwendet werden kann. Jedes Modul kann einen eigenen Lagerungskoordinator 204 aufweisen, wobei die einzelnen Lagerungskoordinatoren 204 mittels jeweils eines Verbindungselements 207 zu einem einzigen Lagerungskoordinator verbunden werden können.

Ein neu angeschlossenes Modul muss typischerweise mit Strom versorgt und an das Datennetzwerk angeschlossen werden. Bei der Einführung eines neuen Moduls kann automatisch die Strom- und Datenverbindung an die Hardware Plattform hergestellt werden.

Eine Möglichkeit für Ports ist die Verwendung von Magneten, um eine Verbindung zwischen den Anschlüssen herzustellen. Während der Installation werden die Pins für Strom und Datenübertragung magnetisiert, wodurch die Pins der Erweiterung 210 in das Basismodul gezogen werden, wo ein mechanischer Halter diese Pins fixiert. So kann erreicht werden, dass keine ständige Magnetisierung vorhanden sein muss. Bei erstmaliger Verbindung wird das Erweiterungsmodul 210 in der Koordinierungseinheit 130 registriert.

Sobald das Modul 210 verbunden wurde, werden die neuen Funktionen, die die Pickup Station 110 nun besitzt, an die Koordinierungseinheit 130 hochgeladen und ggf. an den Nutzer weitergegeben. Unterdessen kann auch die Seriennummer der Erweiterung 210 mit der Seriennummer der Basismodule der Pickup Station 110 verschränkt werden, wodurch eine eindeutige Zuordnung zwischen Erweiterung 210 und Pickup Station 110 möglich ist.

Die logische Installation bedingt typischerweise die physische Installation. Über die Datenanbindung werden dem Basislagerungsmodul 205 die neuen Lagerungsplätze sowie Metadaten darüber mitgeteilt. Metadaten beinhalten z.B. die Art der Lagerung (z.B. Kühlung möglich) und die Größe der ablegbaren Pakete. Das Basislagerungsmodul 205 integriert diese neuen Lagerungsplätze indem sie zu den bestehenden Lagerungsplätzen hinzugefügt werden. Falls nun das Eingabemodul 201 einen neuen Lagerungsplatz von einem Lagerungsmodul 203 benötigt, so kann auch auf die neu hinzugekommenen Lagerungsplätze in einem Erweiterungsmodul 210 zurückgegriffen werden.

Die Warenübergabe erfolgt zwischen einem Anbieter und der Pickup Station 110. Der Anbieter legt ein Produkt (allgemein ein Gut) in die Warenübergabevorrichtung des Eingabemoduls 201. Danach wird der vordere Verschluss der Übergabevorrichtung geschlossen und der hintere Verschluss der Übergabevorrichtung öffnet sich. Über ein Förderband kann das Produkt zu einer sogenannten Produktübergabebrücke gebracht werden. Diese ist dafür zuständig, dass das Produkt vom Eingabefließband in das Paket der zugehörigen Bestellung 141 gelangt. Die Produktübergabebrücke stellt eine Schnittstelle zwischen dem Eingabemodul 201 und dem Lagerungskoordinator 204 dar, wobei der Lagerungskoordinator 204 dafür zuständig ist, dass die Pakete zum richtigen Lagerungsplatz bzw. Lagerungsmodul 203 transportiert werden. Für die Implementierung der Produktübergabebrücke gibt es mehrere Möglichkeiten, mit unterschiedlichen Charakteristiken.

Die Produktübergabebrücke kann eine Falltüre, umfassen. Das Produkt kann über ein Förderband direkt über das Paket in Stellung gebracht werden. Danach öffnet sich zumindest eine Klappe und das Produkt fällt in das Paket hinein.

Alternativ oder ergänzend kann die Produktübergabebrücke einen Roboterarm umfassen. Die Produkte können dazu vom Anbieter in einer normierten Verpackung angeliefert werden (auf der Verpackung kann auch der Barcode der Produkte angebracht sein). Die Verpackungen gibt es z.B. in N normierten Größen. Die Verpackungsgröße des jeweiligen Produktes kann der Station 110 durch das Scannen des Barcodes bekannt sein. Ein Roboterarm nimmt dieses Produkt (in der Verpackung) und legt es an eine exakte Position innerhalb des Pakets, welches sich am Lagerungskoordinator 204 befindet.

Die normierten Verpackungen der einzelnen Produkte können für weitere Optimierungen verwendet werden. Die Anordnung der Produkte innerhalb des Pakets können z.B. möglichst platzsparend und kompakt geordnet werden, da die Station 110 durch die Produktmetadaten bereits weiß, welche Produkte noch zur Bestellung 141 gehören und noch in das Packet gepackt werden müssen. Dabei können die Produkte ggf. in einer willkürlichen Reihenfolge angeliefert worden sein.

Wenn ein Produkt einer bestehenden Bestellung 141 zu einem Paket bzw. zu einer Bestell-Box 206 hinzugefügt wird, dann kann der Lagerungskoordinator 204 dafür zuständig sein, das Paket bzw. die Bestell-Box 206 vom Lagerungsplatz 208 des Pakets zum Eingabemodul 201 zu befördern. Falls es sich um das erste Produkt einer Bestellung 141 handelt, dann wird ein neues Paket bzw. eine neue Bestell-Box 206 und ein neuer Lagerungsplatz 208 allokiert. Nachdem das Produkt dem Paket bzw. der Bestell-Box 206 übergeben wurde, transportiert der Lagerungskoordinator 204 das Paket bzw. die Bestell-Box 206 zum Lagerungsplatz 208.

Die Warenübergabe kann ein oder mehrere der folgenden Schritte umfassen:
1. Übergabe des Produkts vom Anbieter an die Pickup Station 110: Der Anbieter entsperrt die Übergabevorrichtung des Eingabemoduls 201 (die Entsperrung kann z.B. über eine mobile Applikation oder einen PIN Code an der Pickup Station 110 erfolgen). Anschließend legt der Anbieter das Produkt in die Übergabevorrichtung.
2. Übergabeprozess
   a. Über eine mobile Applikation: Der Anbieter markiert das Produkt über eine mobile Applikation als übergabebereit. Die Koordinierungseinheit 130 signalisiert der Pickup Station 110, dass das ausgewählte Produkt des Anbieters jetzt erwartet wird.
   b. Automatisch über einen Barcodescanner: Der Barcode ist in diesem Fall mit dem Produkt und der Order des jeweiligen Kunden verlinkt. Falls ein Produkt nicht erkannt wird, wird es dem Anbieter wieder zurückgegeben.
3. Lagerung des Produkts im Lagerungsmodul 203: Ein neuer Lagerungsplatz 208 wird für die Bestellung und das Produkt zugeordnet.
4. Bestätigung der Einlagerung des Produkts in der Koordinierungseinheit 130: Die Koordinierungseinheit 130 erhält die Bestätigung, dass dieses Produkt einer bestimmten Bestellung 141 bereits geliefert wurde.
5. Bestätigung für den Anbieter, dass das Produkt übernommen wurde: Zusätzlich erhält der Anbieter auch eine Bestätigung, dass sein Produkt übernommen wurde.

Die Warenlagerung basiert auf der Zuweisung von Bestellungen 141 zu Lagerplätzen. Die Lagerplätze befinden sich im Lagerungsmodul 203 oder in ein oder mehreren Erweiterungsmodulen 120 der Pickup Station 110. Der Lagerungskoordinator 204 ist zuständig dafür, dass die Waren von und zu den Lagerungsplätzen 208 transportiert werden. Die Lagerungsplätze 208 können individuell verschieden sein und auch in der Größe variieren. Manche Lagerungsplätze 208 können mehr Stauraum bieten als andere. Die Zuweisung von Lagerungsplätzen 208 hängt unter anderem vom Umfang und Größe der bestellten Produkte ab. Diese Metadaten (Größe, Lagerungsart, Gewicht, etc.) sind der Pickup Station 110 über die Koordinierungseinheit 130 bekannt und werden zur Auswahl von Lagerungsplätzen 208 herangezogen.

Es kann eine Push-Pull Komponente 209 (z.B. ein Schieber) verwendet werden, um eine bidirektionale Verbindung zwischen den einzelnen Lagerungsboxen bzw. Lagerungsplätzen 208 und dem Lagerungskoordinator 204 in einer Fließbandimplementierung zu schaffen. Die Möglichkeit dieselbe Komponente 209 für den Push auf das Fließband hinaus, und für den Pull vom Fließband in die Lagerungsbox bzw. in den Lagerungsplatz 208 zu verwenden, kann durch ein abwinkelbares Gelenk realisiert werden. Ankommende Pakete 206 können über den Pull-Mechanismus jeder Lagerungsbox 208 in die Lagerungsbox 208 hineingezogen werden. Pakete 206, die weiterverarbeitet werden oder an das Ausgabemodul 202 adressiert sind, können über den Push-Mechanismus 209 wieder auf das Förderband (d.h. auf den Lagerungskoordinator 204) hinaus befördert werden.

Nachdem ein Nutzer eine Bestellung 141 aufgegeben hat, werden die einzelnen Anbieter über die Bestellung 141 informiert und bringen die Produkte für die Bestellung 141 zur Pickup Station 110. Durch das Wareneingabemodul 201 werden die Produkte in die Pickup Station 110 überführt und der Bestellung 141 per ID zugeordnet. Das Warenlager überprüft, ob dieser Bestellung bereits ein Lagerplatz zugeordnet wurde. Falls nicht, dann wird ein neuer passender Lagerplatz 208 zugeordnet. Der Lagerplatz 208 kann im Vornherein in Abhängigkeit von der erforderlichen Größe und Lagerungsart reserviert werden, da das System die Größen und Lagerungsarten der jeweiligen Produkte bereits im Vorhinein kennt. Es können typischerweise nur die Produkte abgegeben werden, die die Koordinierungseinheit 130 bereits kennt und für die Metadaten für die Lagerung hinterlegt sind. Die Güter einer Bestellung werden aus dem Lagerplatz 208 zum Eingabemodul 201 gebracht und das übergebene Produkt wird der entsprechenden Bestell-Box 206 hinzugefügt. Abschließend wird die Bestell-Box 206 wieder zum Lagerungsplatz 208 zurückgebracht.

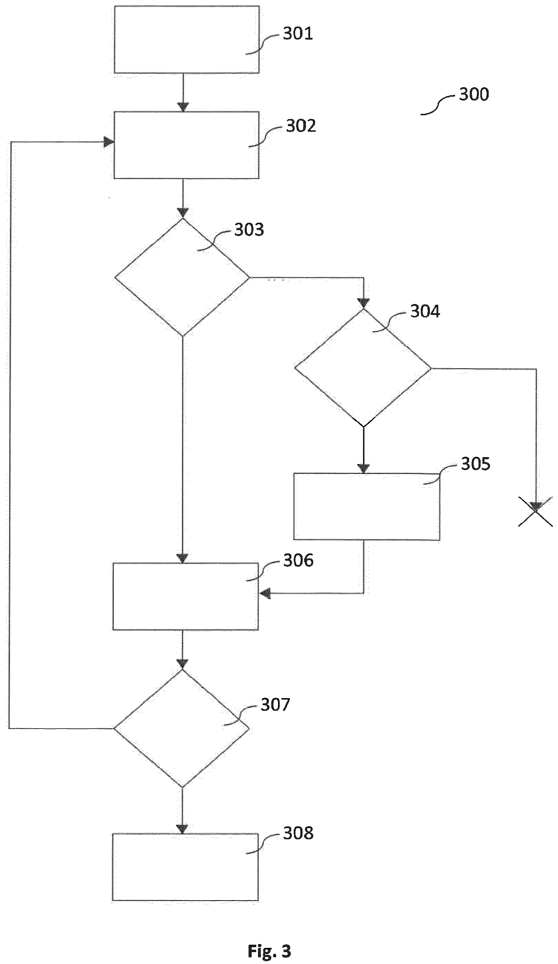

Fig. 3 zeigt einen beispielhaften Kommissionierungsprozess 300, der mehrere mögliche Ablaufzweige aufweisen kann. Der Prozess beginnt mit der Platzierung einer Bestellung 141 (Schritt 301). Die ein oder mehreren Anbieter können dann damit beginnen, Produkte zu liefern (Schritt 302). Grundsätzlich ist der gesamte abgebildete Prozess 300 eine Schleife, die wartet bis alle involvierten Anbieter einer Bestellung 141 ihre Produkte an der Pickup Station 110 abgeliefert haben. Hierbei wird die erste Ablieferung speziell behandelt: Bei der ersten Ablieferung eines Produkts einer Bestellung 141 wird ein neuer Lagerungsplatz für diese eine Bestellung reserviert (Schritt 304). Der Ablauf wird terminiert im Falle, dass keine Lagerungsplätze mehr verfügbar sind. Das ist ein theoretischer Fall, da typischerweise keine weiteren Bestellungen 141 mehr zu einer Pickup Station 110 geschickt werden können, falls die momentane Platzkapazität die Verarbeitung einer Bestellung 141 nicht mehr zulässt.

Nachdem ein Lagerungsplatz mit der Bestellnummer assoziiert wurde (Schritt 305), wird das übergebene Produkt in diesem Lagerungsplatz abgelegt (Schritt 305). Bei weiteren Anlieferungen von Produkten wird überprüft, ob schon ein Lagerungsplatz für diese Bestellung vorliegt (Schritt 303). Wenn dies der Fall ist, wird die partielle Bestellung zum Eingabemodul gebracht und das neu angelieferte Produkt wird zu der Bestellbox hinzugefügt (Schritt 306). Wenn es sich um die letzte Anlieferung eines Produkts handelt impliziert das, dass die Bestellung nun komplett ist (Schritt 307). Als letzter Schritt 308 wird der Nutzer über die Verfügbarkeit seiner Bestellung informiert. Der Nutzer kann dann die Produkte bzw. Güter eines Bestellung 141 an der Abholstation 110 abholen.

Lagerungsplätze, die über ein Erweiterungsmodul 210 hinzugefügt wurden, werden von der Abholstation 110 genauso behandelt wie Lagerungsplätze des Basislagerungsmoduls 205.

Der Lagerungskoordinator 204 kann als ein eigenständiges Modul betrachtet werden, das für die Koordination der Paketlagerung zuständig ist. Anders formuliert, kann der Lagerungskoordinator 204 die gemeinsame Schnittstelle der anderen Module (Eingabe, Ausgabe, Lagerung) bilden. Der Lagerungskoordinator 204 ist auch das Medium, über welches die Pakete transportiert werden. Eine Implementierung des Lagerungskoordinators 204 kann auf einem Fließband basieren, das ggf. Güter für Bestellungen 141 unter anderem auch direkt am Fließband lagern kann. Da der Lagerungskoordinator 204 mit jedem Modul interagiert, werden die einzelnen Interaktionen in den folgenden Punkten aufgeschlüsselt.

Eine Fließbandimplementierung kann vorsehen, dass am Fließband selbst N Pakete gelagert werden können und die Pakete mithilfe von Schiebern zwischen den Modulen und Lagerungsplätzen manövriert werden können.

Sobald ein Produkt von einem Anbieter über das Eingabemodul 201 verarbeitet wird, hat der Lagerungskoordinator 204 typischerweise mehrere Aufgaben:
1. Im Falle, dass es das erste Produkt einer Bestellung ist: Ein neues Paket bzw. eine neue Box des Verpackungslagerungsmoduls unter dem Eingabemodul 201 bereitstellen.
2. Im Falle, dass bereits ein Paket bzw. eine Box für die Bestellung abgelegt wurde: Das Paket der Bestellung vom Lagerungsplatz unter das Eingabemodul 201 stellen.
3. Nachdem das Eingabemodul 201 das Produkt in das Paket abgelegt hat, das Paket wieder (oder erstmalig) zum ausgewählten Lagerungsplatz bringen.

Die Interaktion zwischen dem Lagerungskoordinator 204 und dem Lagerungsmodul 203 findet immer dann statt, wenn Pakete vom Eingabemodul 201 abgelegt, oder zum Ausgabemodul 202 gebracht werden müssen. Grundsätzlich kann der Lagerungskoordinator 204 je nach Implementierung bereits eine gewisse Anzahl von Paketen zwischenspeichern, jedoch ist dieser Platz typischerweise begrenzt. Das Lagerungsmodul 203 bietet zusätzlichen Platz, die der Lagerungskoordinator 204 zum Ablegen von Paketen nutzen kann. Die Pakete müssen dabei vom Lagerungskoordinator 203 zum Lagerplatz gebracht werden und vice versa. Dies kann über einen Schieber erfolgen, der gleichzeitig auch als Zieher verwendet werden kann.

Wenn ein Nutzer eine Bestellung 141 abholen möchte, dann holt der Lagerungskoordinator 204 die jeweilige Bestell-Box 206 aus dem zugehörigen Lagerungsplatz und bring sie zum Ausgabemodul 202. Der Lagerungskoordinator 204 kann als Fließband implementiert sein und das Ausgabemodul 202 kann über ein Verbindungsstück an den Lagerungskoordinator 204 angebunden sein. Sobald der Lagerungskoordinator 204 sich vor dem Ausgabemodul 202 befindet kann der Schieber aktiviert werden und das Paket kann dem Ausgabemodul 202 übergeben werden.

Außerdem kann das Ausgabemodul 202 ggf. Pakete wieder auf den Lagerungskoordinator 204 zurückstellen (z.B., wenn ein Paket fälschlicherweise zur Ausgabe befördert wurde). Der Lagerungskoordinator 204 bewirkt dann die ordnungsgemäße Navigation zurück zum Lagerungsplatz.

Ein Erweiterungsmodul 210 kann einen eigenen Lagerungskoordinator 214 aufweisen, der über ein Verbindungsstück 207 mit dem Lagerungskoordinator 204 der Basiseinheit zu einem Gesamtlagerungskoordinator verbunden ist. Das Verbindungsstück 207, was ein Fließband sein kann, kann über zwei Schieber von beiden Seiten flankiert sein, wodurch Pakete zwischen den einzelnen Lagerungskoordinatoren 204, 214 manövriert werden können.

Das Verpackungsmateriallagerungsmodul kann als Submodul des Eingabemoduls 201 gesehen werden. Es befindet sich typischerweise im gleichen Gehäuse und bietet eine kompakte Lagerung der Verpackungsmaterialen für die Gesamtbestellung eines Kunden. Der Verpackungskarton wird typischerweise flach gedrückt gelagert, wodurch möglichst viele Kartons auf engem Platz gelagert werden können. Ein Zieharm kann einen Karton aus der Lagerungsvorrichtung herausziehen und kann sie in die volle Form entfalten. Über ein Fließband werden die fertigen Verpackungskartons dem Lagerungskoordinator 204 übergeben. Die eingehenden Produkte können von oben in einen Karton hineingegeben werden.

Zur Warenausgabe kann die Bestell-Box einer Bestellung 141 automatisiert vom Lagerungsmodul 203 zum Ausgabemodul 202 transportiert werden. Insbesondere kann die Bestell-Box in den Übergabebereich gebracht werden, wobei der vordere Verschluss des Übergabebereichs noch geschlossen bleiben kann und wobei der hintere Verschluss offen sein kann. Dies erfolgt, sobald sich der Nutzer der Abholstation 110 nähert und als nächster Nutzer identifiziert wird. Die Position des Nutzers ist durch ein mobiles Endgerät 120, welches ggf. periodisch Daten an die Koordinierungseinheit 130 sendet, bekannt. Die Bestellung wird typischerweise erst dann freigegeben, nachdem sich der Nutzer beim Ausgabemodul 202 registriert hat. Die Registrierung kann zwischen dem Endgerät 120 des Nutzers und der Pickup Station 110 erfolgen, wobei die Daten in der Koordinierungseinheit 130 verifiziert werden können. Die Registrierung kann z.B. über das Koppeln mit einem NFC Chip, oder das Scannen eines Barcodes, oder das Eingeben eines PIN Codes an der Pickup Station 110 realisiert werden.

Nachdem der Nutzer sich erfolgreich an der Pickup Station 110 registriert hat, wird die Bestellung im Ausgabemodul 202 freigegeben. Die Freigabe verschließt zuerst den hinteren Verschluss (der hintere Verschluss ist zu diesem Zeitpunkt noch offen, um Bestellungen schneller abtransportieren zu können, für den Fall, dass sich eine falsche Bestellung im Übergabebereich befindet). Der hintere Verschluss trennt den restlichen Teil der Abholstation 110 von der eigentlichen Ausgabe zum Nutzer. Sobald der hintere Verschluss verschlossen wurde, öffnet sich der vordere Verschluss. Der Nutzer kann seine Bestellung von dort herausnehmen und die Pickup Station 110 markiert diesen Bestellvorgang in der angebundenen Koordinierungseinheit 130 als erledigt.

Die vorliegende Erfindung ist nicht auf die gezeigten Ausführungsbeispiele beschränkt. Insbesondere ist zu beachten, dass die Beschreibung und die Figuren nur das Prinzip der vorgeschlagenen Verfahren, Vorrichtungen und Systeme veranschaulichen sollen.

## Patentansprüche

1. Abholstation (110) zur Bereitstellung von Gütern für eine Bestellung (141); wobei die Abholstation (110) umfasst,
- ein Eingabemodul (201), das ausgebildet ist, für eine Bestellung (141) eines Nutzers, eine Mehrzahl von Gütern, die an einer entsprechenden Mehrzahl von unterschiedlichen Zeitpunkten von einer entsprechenden Mehrzahl von unterschiedlichen Anbietern an der Abholstation (110) angeliefert wird, in der Abholstation (110) aufzunehmen;
- einen Lagerungskoordinator (204), der eingerichtet ist, die Mehrzahl von Gütern, die an der entsprechenden Mehrzahl von Zeitpunkten über das Eingabemodul (201) entgegengenommen werden, in einer Bestell-Box (206) für die Bestellung (141) aufzunehmen und in der Bestell-Box (206) zu lagern; und
- ein Ausgabemodul (110), das ausgebildet ist, die in der Bestell-Box (206) aufgenommene Mehrzahl von Gütern für die Bestellung (141) an den Nutzer zu übergeben.

2. Abholstation (110) gemäß Anspruch 1, wobei der Lagerungskoordinator (204) eingerichtet ist,
- vor einer Ankunft des Nutzers an der Abholstation (110), insbesondere auf Basis von Positionsdaten in Bezug auf eine Position des Nutzers, zu prädizieren, dass der Nutzer die Mehrzahl von Gütern für die Bestellung (141) an einem vorausliegenden Zeitpunkt abholen wird; und
- zu bewirken, dass die Bestell-Box (206) an dem vorausliegenden Zeitpunkt an dem Ausgabemodul (110) zur Abholung bereitsteht.

3. Abholstation (110) gemäß einem der vorhergehenden Ansprüche, wobei der Lagerungskoordinator (204) eingerichtet ist,
- eine Mehrzahl von Bestell-Boxen (206) für eine entsprechende Mehrzahl von Bestellungen (141) bereitzustellen;
- bei einer Aufnahme eines Guts über das Eingabemodul (201), insbesondere durch Einlesen eines maschinenlesbaren Codes des aufgenommenen Guts und/oder auf Basis einer Eingabe des übergebenden Anbieters, zu ermitteln, für welche der Mehrzahl von Bestellungen (141) das aufgenommene Gut bestimmt ist; und
- zu bewirken, dass das ausgenommene Gut in der Bestell-Box (206) für die ermittelte Bestellung (141) aufgenommen wird.

4. Abholstation (110) gemäß einem der vorhergehenden Ansprüche, wobei der Lagerungskoordinator (204) eingerichtet ist,
- bei einer Aufnahme eines Guts über das Eingabemodul (201) zu ermitteln, ob für eine mit dem Gut assoziierte Bestellung (141) bereits eine Bestell-Box (206) mit ein oder mehreren anderen Gütern für die Bestellung (141) in der Abholstation (110) gelagert wird; und
- zu bewirkten, dass eine leere Bestell-Box (206) aus einem Box-Lager der Abholstation (110) an dem Eingabemodul (201) bereitgestellt wird, wenn ermittelt wird, dass noch keine Bestell-Box (206) für die Bestellung (141) in der Abholstation (110) gelagert wird; und/oder
- zu bewirken, dass die bereits in der Abholstation (110) gelagerte Bestell-Box (206) an dem Eingabemodul (201) bereitgestellt wird, wenn ermittelt wird, dass bereits eine Bestell-Box (206) für die Bestellung (141) in der Abholstation (110) gelagert wird.

5. Abholstation (110) gemäß einem der vorhergehenden Ansprüche, wobei
- die Abholstation (110) ein Lagerungsmodul (203) zur Lagerung von ein oder mehreren Bestell-Boxen (206) umfasst; und
- der Lagerungskoordinator (204) eingerichtet ist, eine Bestell-Box (206) zwischen dem Eingabemodul (201) und dem Lagerungsmodul (203) und/oder zwischen dem Lagerungsmodul (203) und dem Ausgabemodul (202) zu transportieren.

6. Abholstation (110) gemäß Anspruch 5, wobei die Abholstation (110) derart modular aufgebaut ist, dass das Lagerungsmodul (203) durch ein oder mehrere Erweiterungsmodule (210) zur Lagerung von ein oder mehreren weiteren Bestell-Boxen (206) erweiterbar ist.

7. Abholstation (110) gemäß einem der vorhergehenden Ansprüche, wobei
- der Lagerungskoordinator (204) ein Transportband zum Transport und/oder zur Lagerung einer Bestell-Box (206) umfasst; und/oder
- der Lagerungskoordinator (204) einen Roboterarm umfasst, der eingerichtet ist, ein Gut in eine Bestell-Box (206) und/oder aus einer Bestell-Box (206) zu befördern.

8. Abholstation (110) gemäß einem der vorhergehenden Ansprüche, wobei der Lagerungskoordinator (204) eingerichtet ist,
- zu bestimmen, dass von einem Nutzer eine neue Bestellung (141) abgesetzt wurde, die an der Abholstation (110) bereitgestellt werden soll; und
- in Reaktion darauf, eine Bestell-Box (206) aus einem Box-Lager der Abholstation (110) für die neue Bestellung (141) zu reservieren.

9. Abholstation (110) gemäß einem der vorhergehenden Ansprüche, wobei das Ausgabemodul (202) eingerichtet ist,
- zu überprüfen, ob ein Nutzer autorisiert ist, die Mehrzahl von Gütern für eine Bestellung (141) abzuholen; und
- die Mehrzahl von Gütern für eine Bestellung (141) nicht an den Nutzer zu übergeben, wenn bestimmt wird, dass der Nutzer nicht zur Abholung autorisiert ist; und/oder
- die Mehrzahl von Gütern für eine Bestellung (141), insbesondere nur dann, an den Nutzer zu übergeben, wenn bestimmt wird, dass der Nutzer zur Abholung autorisiert ist.

10. Abholstation (110) gemäß einem der vorhergehenden Ansprüche, wobei das Ausgabemodul (202) ausgebildet ist, die Mehrzahl von Gütern für eine Bestellung (141) in der Bestell-Box (206), insbesondere in einer Bestell-Box (206) aus Karton, an einen Nutzer auszugeben.

11. Abholstation (110) gemäß einem der vorhergehenden Ansprüche, wobei die Abholstation (110) ausgebildet ist,
- an einen Straßenrand gestellt zu werden; und/oder
- die Mehrzahl von Gütern für eine Bestellung (141) automatisch von dem Eingabemodul (201) in eine Bestell-Box (206) und innerhalb der Abholstation (110) zu dem Ausgabemodul (202) zu transportieren.

12. Abholstation (110) gemäß einem der vorhergehenden Ansprüche, wobei der Lagerungskoordinator (203) ausgebildet ist,
- Abmessungsinformation in Bezug auf eine Abmessung der einzelnen Güter der Mehrzahl von Gütern einer Bestellung (141) zu ermitteln; und
- die einzelnen Güter in Abhängigkeit von der Abmessungsinformation in einer Bestell-Box (206) zu platzieren.

13. System (100) zur Bereitstellung von Bestellungen (141); wobei das System (100) umfasst,
- eine Benutzerschnittstelle, insbesondere als Teil eines mobilen Anwendergeräts (120) eines Nutzers, die eingerichtet ist, es einem Nutzer zu ermöglichen, eine gemeinsame Bestellung (141) bei einer Mehrzahl von unterschiedlichen Anbietern für eine entsprechende Mehrzahl von Gütern zur gesammelten Abholung an einer Abholstation (110) abzusetzen;
- die Abholstation (110) gemäß einem der vorhergehenden Ansprüche; und
- eine Koordinierungseinheit (130), die eingerichtet ist,
- zu veranlassen, dass die Mehrzahl von Gütern von der entsprechenden Mehrzahl von Anbietern an die Abholstation (110) geliefert wird; und
- die Abholstation (110) zu veranlassen, die Mehrzahl von Gütern für die Bestellung (141) in einer Bestell-Box (206) zu sammeln und auf Anfrage an den Nutzer auszugeben.

14. System (100) gemäß Anspruch 13, wobei die Koordinierungseinheit (130) eingerichtet ist,
- eine Anzahl von verfügbaren Bestell-Boxen (206) für neue Bestellungen (141) in der Abholstation (110) zu ermitteln; und
- eine Bestellung (141) zur Lieferung an die Abholstation (110) zu unterbinden, wenn in der Abholstation (110) keine Bestell-Box (206) für eine neue Bestellung (141) verfügbar ist.
